# EUROPÄISCHE PATENTSCHRIFT

(11) **EP 2 289 902 B1**
(45) Veröffentlichungstag und Bekanntmachung des Hinweises auf die Patenterteilung: **30.04.2014**
(21) Anmeldenummer: 10009385.5
(22) Anmeldetag: 14.08.2003
(51) Int. Cl.: C07F 15/00

(54) **Rhodium- und Iridium-Komplexe**
Rhodium and iridium complexes
Complexes de rhodium et d'iridium

(30) Priorität: 24.08.2002 DE 10238903
(43) Veröffentlichungstag der Anmeldung: 02.03.2011
(62) Teilanmeldung aus: 03753356.9
(73) Patentinhaber: Merck Patent GmbH, 64293 Darmstadt (DE)
(72) Erfinder: Stoessel, Philipp, Dr., 60487 Frankfurt am Main (DE); Bach, Ingrid, Dr., 51469 Bergisch-Gladbach (DE); Spreitzer, Hubert, Dr., 68519 Viernheim (DE)

(56) Entgegenhaltungen:
- EP-A1- 1 348 711
- EP-A2- 1 239 526
- WO-A-02/066552
- WO-A1-02/060910

## Beschreibung

Metallorganische Verbindungen - speziell Verbindungen der d⁸-Metalle - werden in naher Zukunft als Wirkkomponenten (= Funktionsmaterialien) in einer Reihe von verschiedenartigen Anwendungen, die im weitesten Sinne der Elektronikindustrie zugerechnet werden können, Einsatz als funktionelle Komponenten finden.

Bei den auf organischen Komponenten basierenden Organischen-Elektrolumineszenz-Vorrichtungen (allg. Beschreibung des Aufbaus vgl. US-A-4,539,507 und US-A-5,151,629) bzw. deren Einzelbauteilen, den Organischen-Lichtemittierenden-Dioden (OLEDs) ist die Markteinführung bereits erfolgt, wie die erhältlichen Auto-Radios mit "Organischem Display" der Firma Pioneer belegen. Weitere derartige Produkte stehen kurz vor der Einführung. Trotz allem sind hier noch deutliche Verbesserungen nötig, um diese Displays zu einer echten Konkurrenz zu den derzeit marktbeherrschenden Flüssigkristallanzeigen (LCD) zu machen bzw. diese zu überflügeln.

Eine Entwicklung hierzu, die sich seit einigen Jahren abzeichnet, ist der Einsatz von metallorganischen Komplexen, die Phosphoreszenz statt Fluoreszenz zeigen [M. A. Baldo, S. Lamansky, P. E. Burrows, M. E. Thomson, S. R. Forrest, Applied Physics Letters, 1999, 75, 4-6].

Aus theoretischen Spin-statistischen Gründen ist unter Verwendung metallorganischer Verbindungen als Phosphoreszenz-Emittern eine bis zu vierfache Energie- und Leistungseffizienz möglich. Ob sich diese neue Entwicklung durchsetzen wird, hängt stark davon ab, ob entsprechende Device-Kompositionen gefunden werden können, die diese Vorteile (Triplett-Emission = Phosphoreszenz gegenüber Singulett-Emission = Fluoreszenz) auch in den OLEDs umsetzen können. Als wesentliche Bedingungen für praktische Anwendung sind hier insbesondere eine hohe operative Lebensdauer, eine hohe Stabilität gegenüber Temperaturbelastung und eine niedrige Einsatz- und Betriebsspannung, um mobile Applikationen zu ermöglichen, zu nennen.
Daneben muß der effiziente chemische Zugang zu den entsprechenden Organo-Metall-Verbindungen gegeben sein. Von besonderem Interesse sind dabei Organo-Rhodium- und Iridium-Verbindungen. Bei diesen ist vor allem unter Berücksichtigung des Rhodium- bzw. des Iridiumpreises von maßgebender Bedeutung, daß ein effizienter Zugang zu entsprechenden Derivaten ermöglicht wird.

Ein Schwachpunkt der bisher beschriebenen Phosphoreszenz-Emitter stellt deren schlechte Löslichkeit dar. So sind gerade in letzter Zeit häufig sogenannte Hybrid-Device-Strukturen erwogen worden, die die Vorteile der "small-molecule"-OLEDs mit denen der Polymer-OLEDs (PLEDs) verbinden. Dabei ist es besonders wichtig, die Verbindungen aus Lösung aufzubringen. Hierzu sind bereits mehrere Möglichkeiten beschrieben worden: (a) Aufbringen von puren Schichten von "small-molecules" bzw. Triplett-Emittern, bzw. (b) Aufbringen von Blends (= Mischungen) dieser in polymeren bzw. niedermolekularen Matrizes.
Erhoffte Vorteile dieser Hybrid-Strukturen sind nun unter anderem folgende:
- Das Aufbringen aus Lösung (v. a. mit Hilfe von hochaufgelösten Druckverfahren) dürfte langfristig deutliche Vorteile gegenüber dem heute gängigen Vakuum-Verdampfungsprozeß aufweisen, v. a. hinsichtlich Skalierbarkeit, Strukturierbarkeit, Beschichtungseffizienz und Ökonomie.
- Da derzeit noch keine polymeren Triplett-Emitter bekannt sind, können durch die Verwendung der Hybridstruktur die vorteilhaften Device-Eigenschaften der niedermolekularen Triplett-Emitter mit den vorteilhaften Aufbringungsmethoden der Polymere verknüpft werden.

Typische Phosphoreszenz-Emitter, wie sie bis dato berichtet wurden, sind metallorganische Komplexe, v. a. des Iridiums. Hier wird v. a. über Tris-(phenyl-pyridyl)-komplexe und Derivate berichtet.
Allerdings sind bisher nur - mit einer Ausnahme - Verbindungen beschrieben, die entweder Phenylpyridin direkt, oder mit Fluor, Methoxy oder ähnlichen Gruppen substituiertes Phenylpyridin, oder benzoanelliertes Phenylpyridin, als Liganden enthalten. Diese Komplexe weisen i. d. R. in gängigen Lösemitteln eine geringe Löslichkeit auf (z. B. < 2 g/L, häufig deutlich kleiner 1 g/L; siehe auch Angaben inden Beispielen).
Einzig P. L. Burn et al. beschreiben ein dendrimer-artiges Derivat (Adv. Mater. 2002, 14, 975; Appl. Phys. Lett. 2002, 80, 2645), welches höhere Löslichkeiten aufzuweisen scheint. Allerdings ist in den bisher dazu erschienen Publikationen nicht aufgezeigt, wie diese Verbindung überhaupt zugänglich ist.

Aus WO 2002/044189 sind Verbindungen bekannt, welche einen Liganden enthalten, der über eine Thiophengruppe und eine Isochinolingruppe an das Iridium koordiniert. Verbindungen, in denen die Thiophengruppe durch eine Aryl- oder Heteroarylgruppe substituiert sind, sind nicht offenbart.

Aus dem oben gesagten, ergeben sich zwei wichtige Aufgaben für den weiteren Fortschritt auf dem Gebiet der phosphoreszenten OLEDs:
1. Es besteht ein großer Bedarf an gut löslichen Triplettemittern.
2. Diese müssen synthetisch gut zugänglich sein, da - wie oben bereits erwähnt - der Preis für die "Rohstoffe" bereits enorm hoch ist.

Gegenstand der vorliegenden Erfindung sind deshalb 5'-Mono-, 5',5"-Bis- und 5',5",5"'-Tris-aryl/heteroaryl-funktionalisierte tris-orthometallierte Organo-Rhodium- und Organo-Iridium-Verbindungen, gemäß Verbindungen (la) oder (II). Über eine entsprechende Aryl/heteroaryl-Substitution können entscheidende Materialeigenschaften, wie u. a. die Wellenlänge der Phosphoreszenzemission d. h. die Farbe, die Phosphoreszenzquantenausbeute und die Redox- und Temperaturstabilität der Emitter, eingestellt werden.
Besonders wichtig, gerade im Zusammenhang mit dem o. g., ist dabei auch, daß gerade mit der hier vorliegenden Substitution, die Löslichkeit sehr stark verbessert werden kann (s. v. a. auch die Angaben im Experimentellen Teil). Dies ist v. a. für eine Verwendung mit der o. g. Hybridtechnik von entscheidender Bedeutung.

Die Klasse der 5'-Mono-, 5',5"-Bis- und 5',5",5"'-Tris-aryl/heteroaryl-funktionalisierten tris-orthometallierten Organo-Rhodium- und Organo-Iridium-Verbindungen - gemäß Verbindungen (la) oder (II)- ist neu und bisher in der Literatur nicht beschrieben worden, ihre effiziente Darstellung und Verfügbarkeit als Reinstoffe ist aber für eine Reihe von elektro-optischen Anwendungen von großer Bedeutung.

Wie oben berichtet, ist über die Synthese derartiger Verbindungen noch nicht berichtet worden, wodurch es selbst für den Fachmann schwer ist, die o. g. Resultate von Paul Burn et al. nachzuvollziehen.

Wie im folgenden beschrieben, haben wir ein überraschend einfaches, gut funktionierendes Verfahren zur Herstellung der o. g. neuen Verbindungen gefunden.

Als nächstliegender Stand der Technik für dieses Verfahren ist die übergangsmetallkatalysierte C-C-Kupplung von rein organischen Arylchloriden, - bromiden, -iodiden zu nennen, hier vor allem die Arbeiten von A. Suzuki et al., A. F. Littke et al., aber auch von S. P. Nolan et al.. Aus der großen Zahl von Veröffentlichungen zu diesem Reaktionstyp sei im folgenden auf einige ausgewählte Arbeiten verwiesen.
A. Suzuki et al., A. F. Littke et al. und J. P. Wolf et al. beschreiben die Nickel- und Palladium-katalysierte C-C-Kupplungsreaktion von organischen Arylhalogeniden mit Arylboronsäuren bzw. ihren Estern unter Verwendung von Phosphinliganden und einer Base [N. Miyaura, A. Suzuki Chem. Rev. 1995, 95, 2457; A. F. Littke, C. Dai, G, C. Fu J. Am. Chem. Soc. 2000, 122, 4020; J. P. Wolf, S. L. Buchwald Angew. Chem. 1999, 111, 2570]. Typischerweise werden bei diesen Reaktionstypen Umsätze von 70 - 99 % erreicht. Problematisch gestaltet sich die Reinigung der Rohprodukte, die häufig durch aufwendige chromatographische Verfahren erfolgt.

Neben den oben beschriebenen Verfahren sind Nickel- bzw. Palladium-katalysierte C-C-Kupplungsreaktionen zwischen rein organischen Arylhalogeniden und Arylboronsäuren bzw. ihren Estern unter Verwendung stickstoff-haltiger Ligandensysteme und einer Base, beschrieben worden. Als stickstoff-haltige Ligandensysteme haben sich Imidazol-2-ylidene bzw. deren protonierte Form, die lmidazolium-Salze, aber auch Amine bewährt [C. Zhang, J. Huang, M. L. Trudell, S. P. Nolan, J. Org. Chem. 1999, 64, 3804]. Auch hier werden mit einfachen Edukten typischerweise Umsätze von 50 - 99 % erreicht, wobei die Reinigung der Rohprodukte oft durch aufwendige chromatographische Verfahren erfolgt.

Die übergangsmetallkatalysierte Suzuki-Kupplung von koordinativ an ein Metallzentrum gebundenen Arylhalogeniden - d.h. von *Rhodium-* und *Iridium-organischen Arylhalogeniden -* wie sie im Folgenden beschrieben ist, ist neu und in der Literatur bisher nicht bekannt.

Es wurde überraschend gefunden, daß die neuen Aryl/heteroaryl-substituierten Organometallverbindungen (la) oder (II) - gemäß Schema 1 und 2 - ausgehend von den 5'-Mono-, 5',5"-Bis- und 5',5",5"'-Tris-halogen-substituierten tris-orthometallierten Organo-Rhodium bzw. Organo-Iridium-Verbindungen (IV), d. h. ausgehend von *metallorganischen Arylhalogeniden -* durch die übergangsmetallkatalysierte Umsetzung mit organischen Boronsäuren bzw. deren Estern, in Anwesenheit eines Phosphor- bzw. Stickstoff-haltigen Additivs und einer Base, sowie unter geeigneter Wahl der Reaktionsparameter wie Reaktionstemperatur, Reaktionsmedium, Konzentration und Reaktionszeiten reproduzierbar in etwa 90 - 98 % iger Ausbeute, ohne Verwendung chromatographischer Reinigungsverfahren, gegebenenfalls nach Umkristallisation, in Reinheiten von > 99 % nach NMR bzw. HPLC erhalten werden. Die Herstellung der Organo-Rhodium bzw. Organo-Iridium-Verbindungen der Formel (IV) wird in WO 2002/068435 eingehend beschrieben.

Das oben beschriebene Verfahren zeichnet sich durch drei Eigenschaften besonders aus:
Erstens ist die übergangsmetallkatalysierte, selektive 5'-Mono-, 5',5"-Bis- und 5',5",5"'-Tri-C-C-Kupplung von koordinativ gebundenen Arylhalogeniden des Rhodiums- und Iridiums - d.h. von *Rhodium-* und *Iridium-organischen Arylhalogeniden -* unerwartet und in dieser Form nicht bekannt.

Zweitens ist der hohe erzielte Umsatz, der sich in den reproduzierbar sehr guten Ausbeuten an isoliertem Produkt widerspiegelt, unerwartet und einzigartig für die Suzuki-Kopplung von koordinativ gebundenen Arylhalogeniden.

Drittens fallen die erhaltenen Verbindungen, ohne aufwendige chromatographische Reinigung, gegebenenfalls nach Umkristallisation, in sehr guten Reinheiten von > 99 % nach NMR bzw. HPLC an. Dies ist für die Verwendung in opto-elektronischen Bauelementen, bzw. der Benutzung als Zwischenprodukte für die Darstellung entsprechender Verbindungen essentiell.

Wie oben geschildert, sind die erfindungsgemäßen Verbindungen nicht vorbeschrieben und damit neu.

Diese erfindungsgemäßen Verbindungen weisen nun folgende Vorteile auf:
- Durch geeignete Substitution ist eine große Bandbreite von Emissionsfarben und Lagen der Energieniveaus einstellbar. Hierbei ist besonders darauf zu verweisen, daß gerade durch die große Variabilität von Aryl- und Heteroarylgruppen hier die Eigenschaften in einem sehr großen Bereich verschoben werden können.
- Durch entsprechende Seitenketten an den Aryl- oder Heteroarylresten bzw. durch diese selbst bereits (vgl. auch Daten im Experimentellen Teil), läßt sich die Löslichkeit der erzeugten Komplexe sehr weit erhöhen bzw. einstellen, ohne die sonstigen Eigenschaften negativ zu beeinflußen. Dies ist besonders deshalb bedeutend, da eine direkte Substitution an den direkt komplexierenden Kernen, häufig die Eigenschaften verändert, bzw. die synthetische Zugänglichkeit erschwert.

Gegenstand der vorliegenden Erfindung sind somit die Verbindungen gemäß Formel (II) (Schema 1), 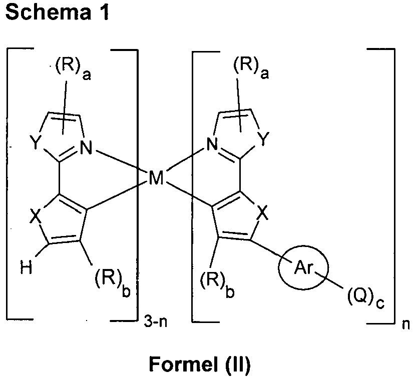 wobei die Symbole und Indizes folgende Bedeutung haben:
- M: Rh, Ir;
- X: O, S, Se;
- Y: S, O, R-C=C-R, R-C=N;
- R: ist gleich oder verschieden bei jedem Auftreten H, F, CI, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-, oder -CONR²- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann; wobei mehrere Substituenten R, sowohl am selben Ring als auch an den beiden unterschiedlichen Ringen zusammen wiederum ein weiteres mono- oder polycyclisches Ringsystem aufspannen können;
- Ar: eine Arylgruppe mit bis zu 40 C-Atomen oder eine Heteroarylgruppe mit 1 bis 40 C-Atomen;
- Q: ist, gleich oder verschieden bei jedem Auftreten und steht für F, Cl, Br, I, CN, COOH, NH₂, OH, SH, NO₂, SO₃H SiR₃ oder eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -CO-, -COO-, -O-CO-, -NR¹-, -(NR²R³)⁺A⁻, oder -CONR⁴-ersetzt sein können und wobei ein oder mehrere H-Atome durch F ersetzt sein können, oder eine Aryl- oder Heteroarylgruppe mit 4 bis 14 C-Atome, die durch einen oder mehrere, nicht aromatische Reste R substituiert sein kann;
- A⁻: ein einfach geladenes Anion oder dessen Äquivalent;
- R¹,R²,R³,R⁴: sind gleich oder verschieden, H oder ein aliphatischer oder aromatischer Kohlenwasserstoffrest mit 1 bis 20 C-Atomen;
- a: ist 0, 1 oder 2,
- b: ist 0, 1, 2 oder 3, bevorzugt 0 oder 1;
- c: ist 0 bis 15, bevorzugt 0, 1, 2, 3, 4 oder 5, besonders bevorzugt 0, 1 oder 2;
- n: ist 1, 2 oder 3.

Eine weitere Ausführungsform der Erfindung sind solche Rh- bzw. Ir-Komplexe gemäß Schema 2, die gemischte Ligandensysteme aufweisen. Diese werden durch die Formel (la) beschrieben: 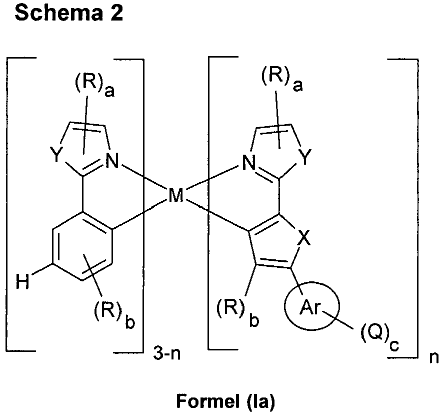 wobei die Symbole und Indizes M, X, Y, R, Ar, Q, A⁻, R¹, R², R³, R⁴, a, b, c und n die gleiche Bedeutungen wie in Anspruch 1 haben.

Bevorzugt sind erfindungsgemäße Verbindungen (la) und (II), bei denen das Symbol Y = O, S bedeutet.

Ebenfalls bevorzugt sind erfindungsgemäße Verbindungen (la) und (II), bei denen Y = R-C=C-R, R-C=N- ist.

Ebenfalls bevorzugt sind erfindungsgemäße Verbindungen (la) und (II), bei denen b = 0 ist.

Ebenfalls bevorzugt sind erfindungsgemäße Verbindungen (la) und (II), bei denen Ar = eine Arylgruppe bzw. Ar = eine Heteroarylgruppe ist.

Ebenfalls bevorzugt sind erfindungsgemäße Verbindungen (la) und (II), bei denen der Rest Ar für Benzol, Toluol, Xylol, Fluorbenzol, Difluorbenzol, Biphenyl, 1,2- bzw. 1,3- bzw. 1,4-Terphenylen, Tetraphenylen, Naphthalin, Fluoren, Phenanthren, Anthracen, 1,3,5-Triphenylbenzol, Pyren, Perylen, Chrysen, Triptycen, [2.2]Paracyclophan, Pyridin, Pyridazin, 4,5-Benzo-pyridazin, Pyrimidin, Pyrazin, 1,3,5-Triazin, Pyrrol, Indol, 1,2,5- bzw. 1,3,4-Oxadiazol, 2,2'- bzw. 4,4'-Diazabiphenyl, Chinolin, Carbazol, 5,10H-Dihydro-phenazin, 10H-Phenoxazin, Phenothiazin, Xanthen, 9-Acridin, Furan, Benzofuran, Thiophen oder Benzothiophen steht.

Besonders bevorzugt sind erfindungsgemäße Verbindungen (la) und (II), bei denen Ar für Carbazol, N-Alkylcarbazol, N-Alkyl-phenoxazine, Phenothiazin und/oder Xanthen, insbesondere für Phenyl, 1- bzw. 2-Naphthyl, 1-, 2- bzw. 9-Anthracenyl, steht.

Bevorzugt sind weiterhin unsymmetrisch substituierte Arylreste Ar. Unsymmetrisch bedeutet hier, daß die Aryl-Fragmente inklusive der Substituenten keine C₂-Symmetrie-Achse aufweisen, die durch die mit dem Metallkomplex verbindende Bindung geht. Grund für diese Bevorzugung ist, daß dadurch die Löslichkeit weiter erhöht werden kann.

Ebenfalls bevorzugt sind erfindungsgemäße Verbindungen (la) und (II), bei denen der Rest Q für F, Cl, Br, CN, NO₂ SiR₃ oder eine geradkettige oder verzweigte oder cyclische Alkyl- oder Alkoxygruppe mit 1 bis 6 C-Atomen, wobei eine oder mehrere benachbarte CH₂-Gruppe durch -CF₂- ersetzt sein kann, steht.

Des weiteren ist es auch möglich, daß einzelne Reste Q Gruppen tragen bzw. darstellen, welche z. B. photochemisch vernetzbar sind. Derartige Gruppen sind beispielsweise in der Anmeldeschrift WO 02/10129 offenbart.
Verwendung können solche Substituenten finden, wenn die entsprechenden Komplexe als Reinschicht aufgebracht werden und durch nachträgliches Vernetzen für weitere Verarbeitungsschritte vorbereitet werden sollen.

Ebenfalls bevorzugt sind erfindungsgemäße Verbindungen (I), (la), (11) und (IIa), bei denen für M = Ir steht.

Ebenfalls bevorzugt sind erfindungsgemäße Verbindungen (la) und (II), bei denen c größer oder gleich 1 ist.

Außerdem sind Gegenstand der vorliegenden Erfindung Verfahren zur Herstellung der Verbindungen gemäß den Formeln (II), durch Umsetzung von Verbindungen der Formel (IV), 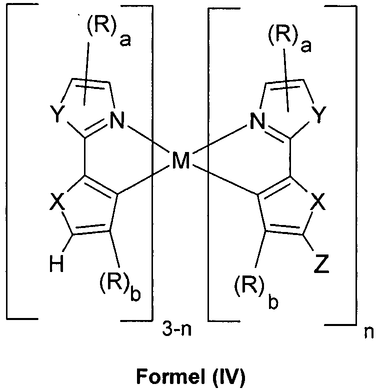 wobei die Symbole und Indizes M, X, Y, R, a, b und n die gleiche Bedeutungen wie für Formel (II) besitzen, und:
- Z: Cl, Br oder I ist,
mit einer Arylboronsäure oder einem Arylboronsäureester der Formel (V) 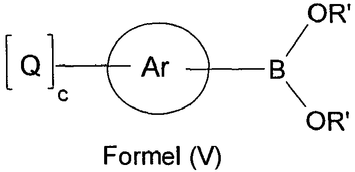 wobei die Symbole und Indizes Q, Ar und c die gleiche Bedeutungen wie in Anspruch 1 haben, und:
- R': gleich oder verschieden bei jedem Auftreten, H oder ein aliphatischer oder aromatischer Kohlenwasserstoffrest mit 1 bis 20 C-Atomen, wobei mehrere Substituenten R' ein mono- oder polycyclisches Ringsystem aufspannen können,
in einem Reaktionsmedium und in Gegenwart eines Übergangsmetalls bzw. einer Übergangsmetallverbindung, eines Phosphor-haltigen bzw. Stickstoff-haltigen Additives und einer Base.

Im Sinne dieses Anmeldetextes soll dabei die Bezeichnung Arylboronsäure auch die entsprechenden Anhydride (cyclisch oder offenkettig) mit umfassen.

Erfindungsgemäße Übergangsmetalle bzw. Übergangsmetallverbindungen sind Nickel oder Nickelverbindungen bzw. Palladium oder Palladiumverbindungen.

Erfindungsgemäß sind Nickel bzw. Nickelverbindungen wie z.B. elementares Nickel, Nickelschwamm, Nickel auf Kieselgur, Nickel auf Aluminiumoxid, Nickel auf Silica, Nickel auf Kohle, Nickel(II)acetat, Nickel(II)acetylacetonat, Nickel(II)chlorid, -bromid, iodid, Additionsverbindungen des Typs NiL₂X₂ wobei X Chlor, Brom, lod und L einem neutralen Liganden wie z. B. Ammoniak, Acetonitril, Propionitril, Benzonitril, entspricht, Nickel(II)nitrat, Nickel(II)sulfat, Nickei(II)oxalat, Bis-cyclooctadiennickel(0). Erfindungsgemäß sind Palladium bzw. Palladiumverbindungen wie z.B. elementares Palladium, Palladiumschwamm, Palladiumschwarz, Palladium auf Aktivkohle, Palladium auf Aluminiumoxid, Palladium auf Silica, Palladium auf Alkali- bzw. Erdalkalicarbonaten wie Natrium-, Kalium-, Calcium-, Strontium- oder Bariumcarbonat, Palladium auf Strontium- oder Bariumsulfat, bzw. Palladiumverbindungen wie z.B. Palladium(II)acetat, Palladium(II)trifluoroacetat, Palladium(II)propionat, Palladium(II)acetylacetonat, Palladium(II)chlorid, -bromid, iodid, Additionsverbindungen des Typs PdL₂X₂ wobei X Chlor, Brom, lod und L einem neutralen Liganden wie z. B. Ammoniak, Acetonitril, Propionitril, Benzonitril, Cyclooctadien entspricht, Palladium(II)nitrat, Palladium(II)sulfat, Palladium(II)tetramin acetat, Palladium(II)tetrakis(acetonitril)-tetrafluoroborat, Tetrakis(triphenylphosphino)palladium(0) und Tris-(dibenzylidenaceton)-dipalladium(0).

Das erfindungsgemäße molare Verhältnis von Nickel, einer Nickelverbindung, Palladium oder einer Palladiumverbindung zu den Verbindungen (III) bzw. (IV) beträgt 0.1 n : 1 bis 0.00001 n : 1.

Erfindungsgemäß wird als Phosphor-haltiges Additiv ein Phosphin verwendet.

Erfindungsgemäße Phosphin-Liganden sind aus der Gruppe der Tri-Aryl-Phosphine, Di-Aryl-Alkyl-Phosphine, Aryl-Dialkyl-Phosphine, Trialkyl-Phosphine, Tri-Hetaryl-Phosphine, Di-Hetaryl-Alkyl-Phosphine, Hetaryl-Dialkyl-Phosphine, Di-Aryl-Hetaryl-Phosphine, Aryl-Di-Hetaryl-Phosphine, wobei die Substituenten am Phosphor gleich oder verschieden, chiral oder achiral sein können wobei ein oder mehrere der Substituenten die Phosphorgruppen mehrerer Phosphine verknüpfen können und wobei ein Teil dieser Verknüpfungen auch ein oder mehrere Metallatome sein können, so z.B. Triphenylphosphin, Tri-o-tolylphosphin, Tri-mesitylphosphin, Tri-o-anisylphosphin, Tri-(2,4,6-trismethoxyphenyl)phosphin, *Tert*-butyl-di-o-tolylphosphin, Di-*tert*-butyl-o-tolylphosphin, Dicyclohexyl-2-biphenylphosphin, Di-*tert*-butyl-2-biphenylphosphin, Triethylphosphin, Tri-*iso*-propyl-phosphin, Tri-cyclohexylphosphin, Tri-*tert*-butylphosphin, Tri-*tert*-pentylphosphin, Bis(di-*tert*-butylphosphino)methan, 1,1 -Bis(di-*tert*-butylphosphino)ferrocen.

Besonders bevorzugt sind die Phosphine Tri-o-tolylphosphin, Dicyclohexyl-2-biphenylphosphin, Di-*tert*-butyl-2-biphenylphosphin, Tri-*tert*-butylphosphin und Tri-*tert*-pentylphosphin.

Erfindungsgemäß werden als Stickstoff-haltige Additive Imidazolium-Salze, Imidazol-2-ylidene bzw. Amine und Aminocarbonsäuren verwendet.

Bevorzugt werden als stickstoff-haltige Additive Imidazolium-Salze wie z. B. 1,3-Bis(phenyl)imidazolium hydrochlorid, 1,3-Bis(2-methylphenyl)imidazolium hydrochlorid, 1,3-Bis(2,6-dimethylphenyl)imidazolium hydrochlorid, 1,3-Bis-(2,4,6-trimethylphenyl)imidazolium hydrochlorid, 1,3-Bis(2,6-di-*iso*-propylphenyl)-imidazolium hydrochlorid, 1,3-Bis(2,6-di-*tert*-butylphenyl)imidazolium hydrochlorid, bzw. Imidazol-2-ylidene wie z. B. 1,3-Bis(phenyl)imidazol-2-yliden, 1,3-Bis(2-methylphenyl)imidazol-2-yliden, 1,3-Bis(2,6-dimethylphenyl)imidazol-2-yliden, 1,3-Bis(2,4,6-trimethylphenyl)imidazol-2-yliden, 1,3-Bis(2,6-di-*iso*-propylphenyl)imidazol-2-yliden, 1,3-Bis(2,6-di*-tert*-butylphenyl)imidazol-2-yliden, bzw. aromatische Amine und Aminocarbonsäuren wie Pyridin, Lutidin, 2,2'-Bipyridyl, oder Chinolin oder α-, β-, y, δ-Aminocarbonsäuren bzw. deren N-alkylierte Formen bzw. deren Natrium- oder Kaliumsalze so z. B. Anthranilsäure, Dimethylanthranilsäure, 2-Pyridincarbonsäure, Dimethylglycin, Dimethylaminobuttersäure oder 3-Indolylessigsäure verwendet.

Das erfindungsgemäße molare Verhältnis des Phosphor- bzw. Stickstoff-haltigen Additives zu Nickel, einer Nickelverbindung, Palladium oder einer Palladiumverbindung beträgt 0.5 : 1 bis 1000 : 1.

Erfindungsgemäße Basen sind organische Base wie z. B. Alkali- und Erdalkalimetall-Alkoholate so z. B. Lithium-, Natrium, Kalium-, Magnesium-, Strontium- und Barium-methanolat, -ethanolat, -propanolat, -butanolat, -*iso*propanolat, -*iso*-butanolat, -*sec*-butanolat, -*tert*-butanolat, -phenolat, organische Amine wie z.B. Trimethylamin, Triethylamin, Tributylamin, Di-*iso*-propylamin, N-Ethyl-di-*iso*-propylamin, Morpholin, N-Methylmorpholin, N-Ethylmorpholin, Pyridin, 2-, 3-, 4- Methylpyridin, Lutidin oder Collidin, Tetraalkylammoniumhydroxide so z.B. Tetramethyl-, Tetraethyl-, Tetrapropyl- und Tetrabutylammoniumhydroxid, Alkali- und Erdalkalimetall-Carboxylate so z. B. Lithium-, Natrium, Kalium-, Magnesium-, Strontium- und Barium-formiat, -acetat, -propionat, -butyrat, -oxalat, oder -benzoat oder Mischungen der genannten Basen.

Ebenfalls erfindungsgemäße Basen sind anorganische Basen wie z. B. Ammoniak, Alkali- und Erdalkalimetall-Oxide so z. B. Lithium-, Natrium, Kalium-, Magnesium-, Strontium- und Barium-oxid, Alkali- und Erdalkalimetall-hydroxide so z. B. Lithium-, Natrium, Kalium-, Magnesium-, Strontium- und Barium-hydroxid, Alkali- und Erdalkalimetall-carbonate so z. B. Lithium-, Natrium, Kalium-, Cäsium-, Magnesium-, Strontium- und Bariumcarbonat, Alkalimetall-hydrogencarbonate so z. B. Lithium-, Natrium, Kalium-, Cäsiumhydrogencarbonat, Alkalimetall-phosphate, hydrogenphosphate, dihydrogenphosphate so z. B. Lithium-, Natrium-, Kaliumphosphat, -hydrogenphosphat, -dihydrogenphosphat, Alkali- und Erdalkalifluoride wie Lithium-, Natrium, Kalium-, Cäsium-, Magnesium-, Strontium- und Bariumfluorid oder Mischungen der genannten Basen.

Das erfindungsgemäße molare Verhältnis der organischen oder anorganischen Base zu den Verbindungen (IV) beträgt 0.5 n : 1 bis 100 n : 1.

Erfindungsgemäße Reaktionsmedien sind protische oder aprotische, halogenfreie oder halogenierte Lösemittel so z.B. Alkohole wie Methanol, Ethanol, Propanol, Butanol, mehrwertige Alkohole wie Ethylenglykol oder Propylenglykol, Nitrile wie Acetonitril, Propionitril oder Benzonitril, Ether wie Diethylether, THF oder Dioxan, aromatische Kohlenwasserstoffe wie Toluol, *o*-, *m*-, *p*-Xylol oder ein Gemisch der isomeren Xylole, Mesitylen, Anisol, Nitrobenzol oder Chlorbenzol, N,N-Dialkylamide wie Dimethylformamid, Dimethylacetamid oder N-Methylpyrrolidinon, Sulfoxide wie Dimethylsulfoxid, Sulfone wie Dimethylsulfon oder Sulfolan, oder Mischungen der genannten Lösungsmittel.

Dem organischen Reaktionsmedium kann gegebenenfalls Wasser zugesetzt werden, wobei je nach verwendetem organischen Lösungsmittel die Reaktion einphasig oder auch zweiphasig durchgeführt wird.

Erfindungsgemäß wird die Umsetzung im Temperaturbereich von 20°C bis 200°C, bevorzugt bei 60°C bis 150°C durchgeführt.

Erfindungsgemäß liegt die Konzentration der Rhodium-haltigen bzw. Iridium-haltigen Edukte - Verbindungen (IV) - im Bereich von 0.0005 mol/l bis 2 mol/l, besonders bevorzugt im Bereich von 0.002 mol/l bis 0.5 mol/l.

Erfindungsgemäß können die Rhodium-haltigen bzw. Iridium-haltigen Edukte gelöst oder suspendiert im Reaktionsmedium vorliegen.

Erfindungsgemäß wird die Reaktion innerhalb von 1 Stunde bis zu 100 Stunden durchgeführt, bevorzugt innerhalb von 1 h bis 60 h.

Erfindungsgemäß kann die Reaktion unter Zusatz von inerten Mahlkörpern wie z. B. Keramik-, Glas- oder Metallkugeln oder Pall- oder Raschig-Ringen durchgeführt werden.

Die Herstellung der erfindungsgemäßen Verbindungen der Formel (la) bzw. (II) erfolgt mittels des vorstehend beschriebenen Verfahrens und führt zu Verbindungen mit einer Reinheit (mittels 1 H-NMR und/oder HPLC bestimmt) mehr als 99%.

Mit den hier erläuterten Synthesemethoden lassen sich unter anderem die im folgenden dargestellten Beispiele für Verbindungen (la) bzw. (II) herstellen.

| | | |
|---|---|---|
| 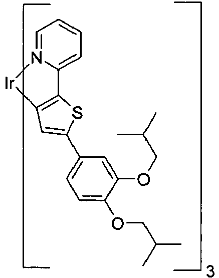 | 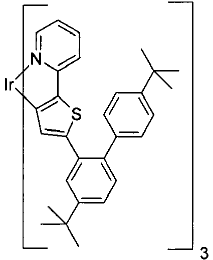 | 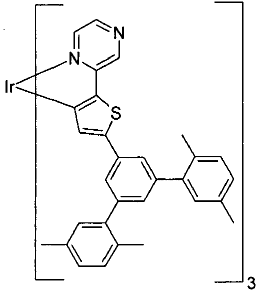 |
| Beispiel 22 | Beispiel 23 | Beispiel 24 |
| 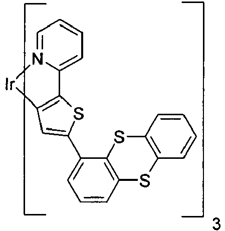 | 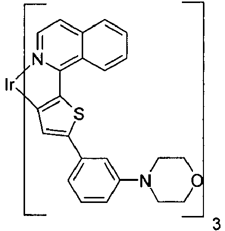 | |
| Beispiel 25 | Beispiel 26 | |

Für die Anwendung der erfindungsgemäßen Materialien in den bereits o. g. und auch unten noch erläuterten elektronischen Bauelementen, kann es nun vorteilhaft sein, diese in weitere Materialien einzumischen.
Besonders bevorzugt ist hierbei das Einmischen in polymere Verbindungen. Deshalb ist ein weiterer Bestandteil der vorliegenden Erfindung Mischungen von einer oder mehrerer Verbindungen der Formel (la) und/oder (II) gemäß Anspruch 1 mit nicht konjugierten, teilkonjugierten oder konjugierten Polymeren.

Beispiele für diese Polymere, die sich zum Mischen eignen, sind solche aus der Gruppe der Polyfluorene, Poly-spirobifluorene, Poly-para-phenylene, Poly-paraphenylenevinylene, Poly-carbazole, Poly-vinylcarbazole, Polythiophene oder auch aus Copolymeren, die mehrere der hier genannten Einheiten aufweisen.

Da die Beschichtung bevorzugt aus Lösung geschieht, ist es bevorzugt, daß die entsprechenden Polymere in organischen Lösemitteln löslich sind.

Es ist auch möglich, die erfindungsgemäßen Materialien mit nicht-polymeren Materialien zu mischen. Des weiteren kann es noch Vorteile bringen, Mehrkomponenten-Mischungen, enthaltend erfindungsgemäße Materialien, Polymere und weitere niedermolekulare Materialien zu verwenden.

Eine weitere Möglichkeit besteht auch darin, die so erhaltenen erfindungsgemäßen Verbindungen nun als Co-Monomere in konjugierte oder auch teilkonjugierte Polymere mit ein-zu-polymerisieren. So können sie u. a. in lösliche Polyfluorene (z. B. gemäß EP-A-842208 oder WO 00/22026), Poly-spirobifluorene (z. B. gemäß EP-A- 707020), Poly-para-phenylene (z. B. gemäß WO 92/18552), Poly-carbazole, Polythiophene (z. B. gemäß EP-A-1028136) oder auch Copolymere die mehrere der hier genannten Einheiten aufweisen, durch Polymerisation inkorporiert werden.

Diese Polymere finden Verwendung als aktive Komponenten in elektronischen Bauteilen, wie z. B. Organischen Leuchtdioden (OLEDs), Organischen Integrierten Schaltungen (O-ICs), Organischen Feld-Effekt-Transistoren (OFETs), Organischen Dünnfilmtransistoren (OTFTs), Organischen Solarzellen (O-SCs) oder auch Organische Laserdioden (O-Laser).

## Patentansprüche

1. Verbindung der Formel (II) oder (la), 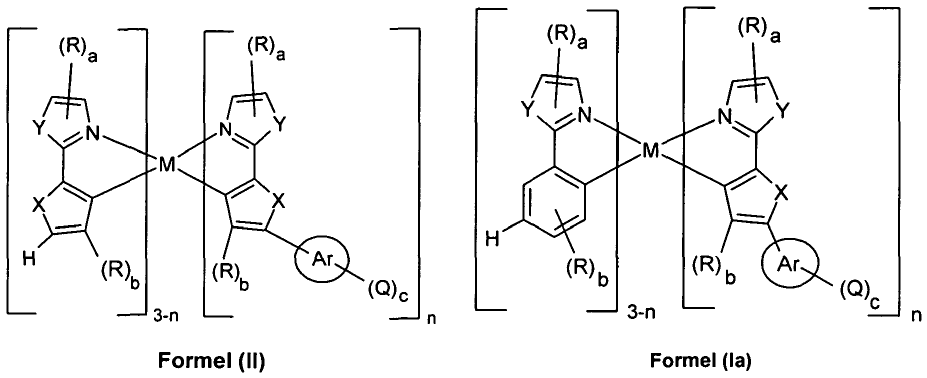 wobei die Symbole und Indizes folgende Bedeutung haben:
M ist Rh oder Ir;
X ist O, S oder Se;
Y ist S, O, R-C=C-R oder R-C=N;
R ist gleich oder verschieden bei jedem Auftreten H, F, Cl, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-, oder -CONR²- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann; wobei mehrere Substituenten R, sowohl am selben Ring als auch an den beiden unterschiedlichen Ringen zusammen wiederum ein weiteres mono- oder polycyclisches Ringsystem aufspannen können;
Ar ist eine Arylgruppe mit bis zu 40 C-Atomen oder Heteroarylgruppe mit 1 bis 40 C-Atomen;
Q ist gleich oder verschieden bei jedem Auftreten und steht für F, Cl, Br, I, CN, COOH, NH₂, OH, SH, NO₂, SO₃H, SiR₃ oder eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -CO-, -COO-, -O-CO-, -NR¹-, -(NR²R³)A⁻, oder -CONR⁴-ersetzt sein können und wobei ein oder mehrere H-Atome durch F ersetzt sein können, oder eine Aryl- oder Heteroarylgruppe mit 4 bis 14 C-Atome, die durch einen oder mehrere, nicht aromatische Reste R substituiert sein kann;
A⁻ ist ein einfach geladenes Anion oder dessen Äquivalent;
R¹,R²,R³,R⁴ sind gleich oder verschieden H oder ein aliphatischer oder aromatischer Kohlenwasserstoffrest mit 1 bis 20 C-Atomen;
a ist 0, 1 oder 2,
b ist 0, 1, 2 oder 3, bevorzugt 0 oder 1;
c ist 0 bis 15, bevorzugt 0, 1, 2, 3, 4 oder 5, besonders bevorzugt 0, 1 oder 2;
n ist 1, 2 oder 3.

2. Verbindung gemäß Anspruch 1, **dadurch gekennzeichnet, dass** das Symbol Y = O oder S bedeutet.

3. Verbindung gemäß Anspruch 1 oder 2, **dadurch gekennzeichnet, daß** Y für R-C=C-R oder R-C=N- steht.

4. Verbindung gemäß einem oder mehreren der Ansprüche 1 bis 3, **dadurch gekennzeichnet, daß** b = 0 gilt.

5. Verbindung gemäß einem oder mehreren der Ansprüche 1 bis 4, **dadurch gekennzeichnet, daß** Ar für eine Arylgruppe steht.

6. Verbindung gemäß einem oder mehreren der Ansprüche 1 bis 4, **dadurch gekennzeichnet, daß** Ar für eine Heteroarylgruppe steht.

7. Verbindung gemäß Anspruch 5 oder 6, **dadurch gekennzeichnet, daß** der Rest Ar für Benzol, Toluol, Xylol, Fluorbenzol, Difluorbenzol, Biphenyl, 1,2- bzw. 1,3- bzw. 1,4-Terphenyl, Tetraphenyl, Naphthyl, Fluoren, Phenanthren, Anthracen, 1,3,5-Triphenylbenzol, Pyren, Perylen, Chrysen, Triptycen, [2.2]Paracyclophan, Pyridin, Pyridazin, 4,5-Benzo-pyridazin, Pyrimidin, Pyrazin, 1,3,5-Triazin, Pyrrol, Indol, 1,2,5-bzw. 1,3,4-Oxadiazol, 2,2'- bzw. 4,4'-Diazabiphenyl, Chinolin, Carbazol, 5,10H-Dihydro-phenazin, 10H-Phenoxazin, Phenothiazin, Xanthen, 9-Acridin, Furan, Benzofuran, Thiophen oder Benzothiophen steht.

8. Verbindung gemäß Anspruch 5 oder 6, **dadurch gekennzeichnet, daß** Ar für Carbazol, N-Alkylcarbazol, N-Alkyl-phenoxazine, Phenothiazin, Xanthen, Phenyl, 1-bzw. 2-Naphthyl oder 1-, 2- bzw. 9-Anthracenyl steht.

9. Verbindung gemäß einem oder mehreren der Anspruch 1 bis 8, **dadurch gekennzeichnet, daß** Q für F, Cl, Br, CN, NO₂ SiR₃ oder eine geradkettige oder verzweigte oder cyclische Alkyl- oder Alkoxygruppe mit 1 bis 6 C-Atomen steht, wobei eine oder mehrere benachbarte CH₂-Guppe durch -CF₂- ersetzt sein kann.

10. Verbindung gemäß einem oder mehreren der Ansprüche 1 bis 9, **dadurch gekennzeichnet, daß** M = Ir gilt.

11. Verbindungen gemäß einem oder mehreren der Ansprüche 1 bis 10, **dadurch gekennzeichnet, daß** c größer oder gleich 1 ist.

12. Verfahren zur Herstellung einer Verbindung gemäß Anspruch 1 durch Umsetzung einer Verbindung der Formel (IV), 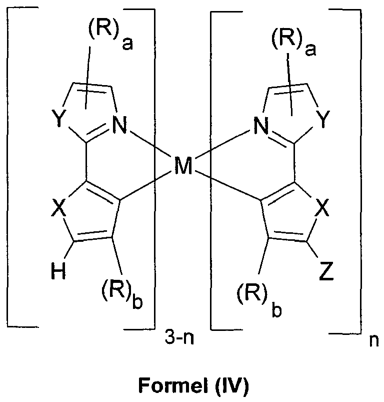 wobei die Symbole und Indizes M, X, Y, R, a, b und n die gleiche Bedeutungen wie in Anspruch 1 haben, und
Z Cl, Br oder I ist,
mit einer Arylboronsäure oder einem Arylboronsäureester der Formel (V) 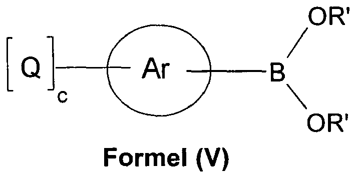 wobei die Symbole und Indizes Q, Ar und c die gleiche Bedeutungen wie in Anspruch 1 haben, und:
R' sind gleich oder verschieden bei jedem Auftreten, H oder ein aliphatischer oder aromatischer Kohlenwasserstoffrest mit 1 bis 20 C-Atomen, wobei mehrere Substituenten R' ein mono- oder polycyclisches Ringsystem aufspannen können,
in einem Reaktionsmedium und in Gegenwart eines Übergangsmetalls bzw. einer Übergangsmetallverbindung, eines Phosphor-haltigen bzw. Stickstoff-haltigen Additivs und einer Base.

13. Mischung von einer oder mehrerer Verbindungen gemäß Anspruch 1 mit nicht konjugierten, teilkonjugierten oder konjugierten Polymeren.

14. Verwendung der Verbindung gemäß Anspruch 1 oder einer Mischung gemäß Anspruch 13 in organischen Elektrolumineszenz- und/oder Phosphoreszenz-Vorrichtungen, insbesondere als Emissionsschicht (EML), oder in Solarzellen, in photovoltaischen Vorrichtungen, wie organischen Photodetektoren oder organischen Solarzellen, in organischen ICs (organischen integrierten Schaltungen), in organischen Feld-Effekt-Transistoren (OTFT), in organischen Dünnschichtransitoren und in organischen-Feststofflasern.

15. Elektronisches Bauteil enthaltend eine Verbindung gemäß Anspruch 1 oder eine Mischung gemäß Anspruch 13.

## Claims

1. Compound of the formula (II) or (Ia), 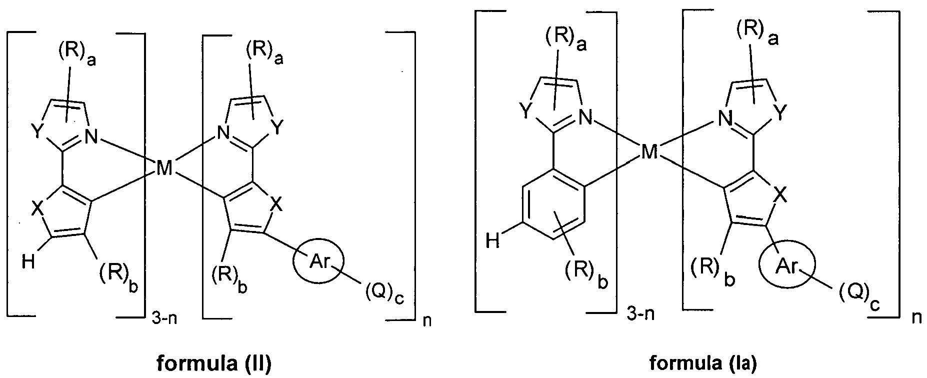 where the symbols and indices have the following meaning:
M is Rh or Ir;
X is O, S or Se;
Y is S, O, R-C=C-R or R-C=N;
R is, identically or differently on each occurrence, H, F, Cl, NO₂, CN, a straight-chain or branched or cyclic alkyl or alkoxy group having 1 to 20 C atoms, where one or more non-adjacent CH₂ groups may be replaced by -O-, -S-, -NR¹- or -CONR²- and where one or more H atoms may be replaced by F, or an aryl or heteroaryl group having 4 to 14 C atoms, which may be substituted by one or more non-aromatic radicals R; where a plurality of substituents R, both on the same ring and also on the two different rings, together may in turn form a further mono- or polycyclic ring system;
Ar is an aryl group having up to 40 C atoms or heteroaryl group having 1 to 40 C atoms;
Q is identical or different on each occurrence and stands for F, Cl, Br, I, CN, COOH, NH₂, OH, SH, NO₂ SO₃H, SiR₃ or a straight-chain or branched or cyclic alkyl or alkoxy group having 1 to 20 C atoms, where one or more non-adjacent CH₂ groups may be replaced by -O-, -S-, -CO-, -COO-, -O-CO-, -NR¹-, -(NRZR³)⁺A⁻ or -CONR⁴- and where one or more H atoms may be replaced by F, or an aryl or heteroaryl group having 4 to 14 C atoms, which may be substituted by one or more non-aromatic radicals R;
A⁻ is a singly charged anion or an equivalent thereof;
R¹,R²,R³,R⁴ are, identically or differently, H or an aliphatic or aromatic hydrocarbon radical having 1 to 20 C atoms;
a is 0, 1 or 2;
b is 0, 1, 2 or 3, preferably 0 or 1;
c is 0 to 15, preferably 0, 1, 2, 3, 4 or 5, particularly preferably 0, 1 or 2;
n is 1, 2 or 3.

2. Compound according to Claim 1, **characterised in that** the symbol Y denotes O or S.

3. Compound according to Claim 1 or 2, **characterised in that** Y stands for R-C=C-R or R-C=N-.

4. Compound according to one or more of Claims 1 to 3, **characterised in that** b = 0.

5. Compound according to one or more of Claims 1 to 4, **characterised in that** Ar stands for an aryl group.

6. Compound according to one or more of Claims 1 to 4, **characterised in that** Ar stands for a heteroaryl group.

7. Compound according to Claim 5 or 6, **characterised in that** the radical Ar stands for benzene, toluene, xylene, fluorobenzene, difluorobenzene, biphenyl, 1,2- or 1,3-or 1,4-terphenyl, tetraphenyl, naphthyl, fluorene, phenanthrene, anthracene, 1,3,5-triphenylbenzene, pyrene, perylene, chrysene, triptycene, [2,2]paracyclophane, pyridine, pyridazine, 4,5-benzopyridazine, pyrimidine, pyrazine, 1,3,5-triazine, pyrrole, indole, 1,2,5- or 1,3,4-oxadiazole, 2,2'- or 4,4'-diazabiphenyl, quinoline, carbazole, 5,10H-dihydrophenazine, 10H-phenoxazine, phenothiazine, xanthene, 9-acridine, furan, benzofuran, thiophene or benzothiophene.

8. Compound according to Claim 5 or 6, **characterised in that** Ar stands for carbazole, N-alkylcarbazole, N-alkylphenoxazine, phenothiazine, xanthene, phenyl, 1- or 2-naphthyl or 1-, 2- or 9-anthracenyl.

9. Compound according to one or more of Claims 1 to 8, **characterised in that** Q stands for F, Cl, Br, CN, NO₂, SiR₃ or a straight-chain or branched or cyclic alkyl or alkoxy group having 1 to 6 C atoms, where one or more adjacent CH₂ groups may be replaced by -CF₂-.

10. Compound according to one or more of Claims 1 to 9, **characterised in that** M=Ir.

11. Compound according to one or more of Claims 1 to 10, **characterised in that** c is greater than or equal to 1.

12. Process for the preparation of a compound according to Claim 1 by reaction of a compound of the formula (IV), 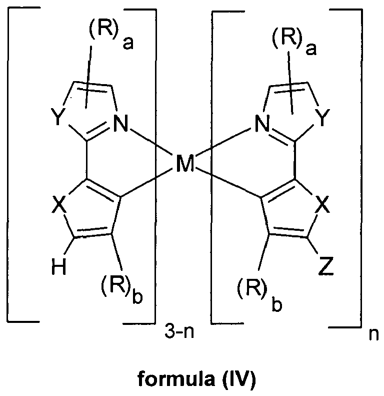 where the symbols and indices M, X, Y, R, a, b and n have the same meanings as in Claim 1, and
Z is Cl, Br or I,
with an arylboronic acid or arylboronic acid ester of the formula (V) 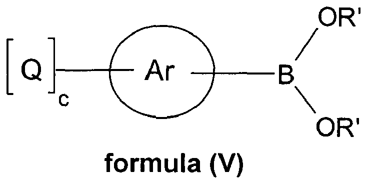 where the symbols and indices Q, Ar and c have the same meanings as in Claim 1, and:
R' are, identically or differently on each occurrence, H or an aliphatic or aromatic hydrocarbon radical having 1 to 20 C atoms, where a plurality of substituents R' may form a mono- or polycyclic ring system,
in a reaction medium and in the presence of a transition metal or transition-metal compound, a phosphorus-containing or nitrogen-containing additive and a base.

13. Mixture of one or more compounds according to Claim 1 with non-conjugated, partially conjugated or conjugated polymers.

14. Use of the compound according to Claim 1 or a mixture according to Claim 13 in organic electroluminescent and/or phosphorescent devices, in particular as emission layer (EML), or in solar cells, in photovoltaic devices, such as organic photodetectors or organic solar cells, in organic ICs (organic integrated circuits), in organic field-effect transistors (OFETs), in organic thin-film transistors and in organic solid-state lasers.

15. Electronic component comprising a compound according to Claim 1 or a mixture according to Claim 13.

## Revendications

1. Composé de la formule (II) ou (la), 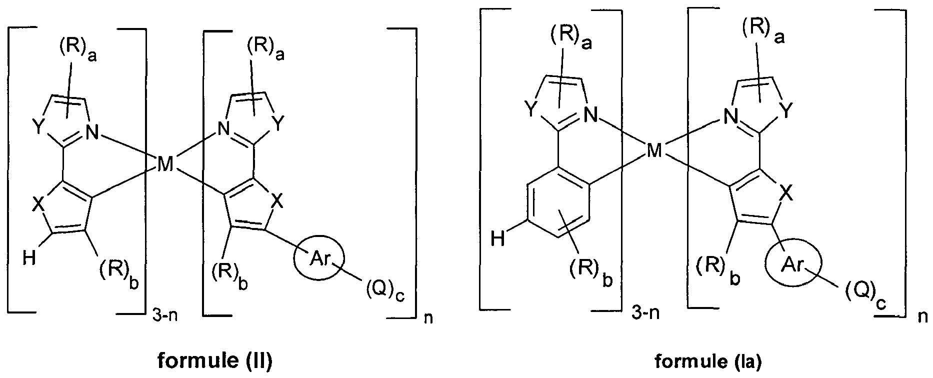 dans lesquelles les symboles et indices présentent la signification qui suit :
M est Rh ou Ir ;
X est O, S ou Se ;
Y est S, O, R-C=C-R ou R-C=N ;
R est, de manière identique ou différente pour chaque occurrence, H, F, CI, NO₂, CN, un groupe alkyle ou alcoxy en chaîne droite ou ramifié ou cyclique comportant de 1 à 20 atomes de C, où un ou plusieurs groupe(s) CH₂ non adjacent(s) peut/peuvent être remplacé(s) par -O-, -S-, -NR¹- ou -CONR²- et où un ou plusieurs atome(s) de H peut/ peuvent être remplacé(s) par F, ou un groupe aryle ou hétéroaryle comportant de 4 à 14 atomes de C, lequel peut être substitué par un ou plusieurs radicaux non aromatiques R ; où une pluralité de substituants R, à la fois sur le même cycle et également sur les deux cycles différents, peuvent former ensemble à leur tour un autre système de cycle mono- ou polycyclique ;
Ar est un groupe aryle comportant jusqu'à 40 atomes de C ou un groupe hétéroaryle comportant de 1 à 40 atomes de C ;
Q est identique ou différent pour chaque occurrence et représente F, CI, Br, I, CN, COOH, NH₂, OH, SH, NO₂ SO₃H, SiR₃ ou un groupe alkyle ou alcoxy en chaîne droite ou ramifié ou cyclique comportant de 1 à 20 atomes de C, où un ou plusieurs groupe(s) CH₂ non adjacent(s) peut/peuvent être remplacé(s) par -O-, -S-, -CO-, -COO-, -O-CO-, -NR¹-, -(NR²R³)⁺A⁻ ou -CONR⁴- et où un ou plusieurs atome(s) de H peut/peuvent être remplacé(s) par F, ou un groupe aryle ou hétéroaryle comportant de 4 à 14 atomes de C, lequel peut être substitué par un ou plusieurs radicaux non aromatiques R ;
A⁻ est un anion à charge unique ou son équivalent ;
R¹,R²,R³,R⁴ sont, de manière identique ou différente, H ou un radical hydrocarbone aliphatique ou aromatique comportant de 1 à 20 atomes de C ;
a est 0, 1 ou 2 ;
b est 0, 1, 2 ou 3, de façon préférable 0 ou 1 ;
c est 0 à 15, de façon préférable 0, 1, 2, 3, 4 ou 5, de façon particulièrement préférable 0, 1 ou 2 ;
n est 1, 2 ou 3.

2. Composé selon la revendication 1, **caractérisé en ce que** le symbole Y représente O ou S.

3. Composé selon la revendication 1 ou 2, **caractérisé en ce que** Y représente R-C=C-R ou R-C=N-.

4. Composé selon une ou plusieurs des revendications 1 à 3, **caractérisé en ce que** b = 0.

5. Composé selon une ou plusieurs des revendications 1 à 4, **caractérisé en ce que** Ar représente un groupe aryle.

6. Composé selon une ou plusieurs des revendications 1 à 4, **caractérisé en ce que** Ar représente un groupe hétéroaryle.

7. Composé selon la revendication 5 ou 6, **caractérisé en ce que** le radical Ar représente benzène, toluène, xylène, fluorobenzène, difluorobenzène, biphényle, 1,2- ou 1,3- ou 1,4-terphényle, tétraphényle, naphtyle, fluorène, phénanthrène, anthracène, 1,3,5-triphénylbenzène, pyrène, pérylène, chrysène, triptycène, [2,2]paracyclo-phane, pyridine, pyridazine, 4,5-benzopyridazine, pyrimidine, pyrazine, 1,3,5-triazine, pyrrole, indole, 1,2,5- ou 1,3,4-oxadiazole, 2,2'- ou 4,4'-diazabiphényle, quinoline, carbazole, 5,10H-dihydrophénazine, 10H-phénoxazine, phénothiazine, xanthène, 9-acridine, furane, benzofurane, thiophène ou benzothiophène.

8. Composé selon la revendication 5 ou 6, **caractérisé en ce que** Ar représente carbazole, N-alkylcarbazole, N-alkylphénoxazine, phénothiazine, xanthène, phényle, 1-ou 2-naphtyle ou 1-, 2- ou 9-anthracényle.

9. Composé selon une ou plusieurs des revendications 1 à 8, **caractérisé en ce que** Q représente F, CI, Br, CN, NO₂, SiR₃ ou un groupe alkyle ou alcoxy en chaîne droite ou ramifié ou cyclique comportant de 1 à 6 atomes de C, où un ou plusieurs groupes CH₂ adjacents peut/peuvent être remplacé(s) par -CF₂-.

10. Composé selon une ou plusieurs des revendications 1 à 9, **caractérisé en ce que** M = Ir.

11. Composé selon une ou plusieurs des revendications 1 à 10, **caractérisé en ce que** c est supérieur ou égal à 1.

12. Procédé pour la préparation d'un composé selon la revendication 1 par réaction d'un composé de la formule (IV), 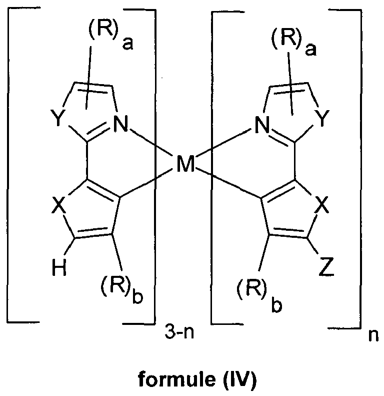 dans laquelle les symboles et indices M, X, Y, R, a, b et n présentent les mêmes significations que selon la revendication 1, et
Z est CI, Br ou I,
avec un acide arylboronique ou un ester d'acide arylboronique de la formule (V) 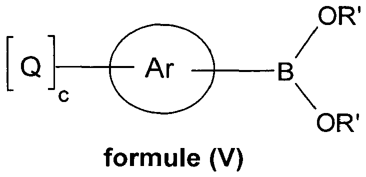 dans laquelle les symboles et indices Q, Ar et c présentent les mêmes significations que selon la revendication 1, et :
R' sont, de manière identique ou différente pour chaque occurrence, H ou un radical hydrocarbone aliphatique ou aromatique comportant de 1 à 20 atomes de C, où une pluralité de substituants R' peuvent former un système de cycle mono- ou polycyclique,
dans un milieu de réaction et en présence d'un métal de transition ou d'un composé de métal de transition, d'un additif contenant du phosphore ou contenant de l'azote et d'une base.

13. Mélange d'un ou de plusieurs composé(s) selon la revendication 1 avec des polymères non conjugués, partiellement conjugués ou conjugués.

14. Utilisation du composé selon la revendication 1 ou d'un mélange selon la revendication 13 dans des dispositifs électroluminescents et/ou phosphorescents organiques, en particulier en tant que couche d'émission (EML), ou dans des cellules solaires, dans des dispositifs photovoltaï ques, tels que des photodétecteurs organiques ou des cellules solaires organiques, dans des IC organiques (des circuits intégrés organiques), dans des transistors à effet de champ organiques (OFET), dans des transistors à film mince organiques et dans des lasers à l'état solide organiques.

15. Composant électronique comprenant un composé selon la revendication 1 ou un mélange selon la revendication 13.
